# EUROPÄISCHE PATENTSCHRIFT

(11) **EP 1 408 260 B1**
(45) Veröffentlichungstag und Bekanntmachung des Hinweises auf die Patenterteilung: **03.05.2006**
(21) Anmeldenummer: 03022732.6
(22) Anmeldetag: 09.10.2003
(51) Int. Cl.: F16H 63/48, F16H 63/38

(54) **Verriegelungseinheit**
Latch arrangement
Dispositif de verrouillage

(30) Priorität: 11.10.2002 DE 10247588
(43) Veröffentlichungstag der Anmeldung: 14.04.2004
(73) Patentinhaber: SVM Schultz Verwaltungs-GmbH & Co. KG, 87700 Memmingen (DE)
(72) Erfinder: Kleinert, Dieter, Dipl.-Ing., 87700 Memmingen (DE); Scheer, Georg, Dipl.-Ing., 87757 Kirchheim (DE); Willburger, Winfried, Dipl.-Ing., 88457 Oberopfingen (DE); Müller, Robert, Dipl.-Ing., 87719 Mindelheim (DE)
(74) Vertreter: Pfister, Stefan Helmut Ulrich

(56) Entgegenhaltungen:
- WO-A-02/10619
- DE-A- 10 105 637
- DE-A- 19 820 920

## Beschreibung

Die Erfindung betrifft eine Verriegelungseinheit für das Verriegeln der Bewegung eines mit Druck beaufschlagbaren Kolbens, wobei ein Elektromagnet vorgesehen ist, dessen Anker beziehungsweise Ankerstange unmittelbar oder mittelbar auf ein Betätigungselement wirkt, welches mit einem Rastelement derart zusammenwirkt, daß das Rastelement in einer Verriegelungsstellung die Bewegung des Kolbens blockiert beziehungsweise das Rastelement in einer Entriegelungsstellung die Bewegung des Kolbens freigibt.

Vorgenannte Verriegelungseinheiten finden insbesondere bei der Parksperre von Automatikgetrieben Verwendung.

Ein Fahrzeug mit Handschaltgetriebe kann durch Einlegen eines Ganges gegen unbeabsichtigtes Wegrollen im Stillstand bei abgestelltem Motor gesichert werden. Bei Automatikgetrieben ist dies jedoch nicht möglich, da bei abgestelltem Motor kein Kraftschluß zu den Antriebsrädern besteht. Automatikgetriebe haben daher eine mechanische Verriegelung der Getriebeabtriebswelle, die in der Parkstellung zu aktivieren ist, das heißt, einzustellen ist und ein Wegrollen des Fahrzeuges verhindert.

Die Verriegelungseinheit wirkt dabei zusammen mit dem hydraulischen Kreislauf des Automatikgetriebes. Bei eingelegter Parksperre ist es dabei in der Regel vorgesehen, daß der Kolben entriegelt ist. In der Fahrstellung, also bei ausgeschalteter Parksperre, ist der druckbeaufschlagte Kolben verriegelt. Üblicherweise wirkt dabei die Kolbenstange des Kolbens auf eine Klinke, die in den Antriebsstrang entsprechend der Stellung der Parksperre eingreift oder nicht.

Die hierfür verwendeten Verriegelungseinheiten weisen als Betätigungselement Kugeln auf, die radial zur Ankerstange beweglich gelagert sind und aufgrund der Bewegungen der Ankerstange im Fahrbetrieb nach außen gedrückt werden, um mit einem Rastelement zusammenzuwirken und dadurch die Bewegung des Kolbens zu verriegeln.

Im stromlosen Zustand (in der Regel die Parkstellung) wird die Entriegelungsstellung des Kolbens dadurch erreicht, daß eine Feder die Ankerstange gegen die sonst überwiegende Haltekraft des Elektromagneten derart bewegt, daß die Kugeln radial nach innen zurückweichen können und so die Bewegung des Kolbens nicht mehr blockieren. Die Anordnung ist dabei so getroffen, daß die Entriegelungsstellung (Parkstellung) passiv sicher ist, das heißt, im nichtbestromten Zustand wird die Bewegung des Kolbens nicht blockiert, der Kolben ist entriegelt.

In dem hier dargestellten Anwendungsbeispiel nach dem Stand der Technik, entspricht die eingerückte Parkstellung dem entriegelten Kolben, die ausgerückte Parkstellung dem verriegelten Kolben. Im Sinne dieser Erfindung ist es aber auch möglich, diesen Zusammenhang umzustellen, das bedeutet, einen entriegelten Kolben bei ausgerückter Parksperre einzusetzen bzw. umgekehrt.

Die Verwendung der Kugeln als Betätigungselemente führt jedoch zu einigen Nachteilen. Die Kugeln laufen im Öl, welches zum Beispiel auf der Druckseite auf den Kolben anliegt. Es ist daher nicht gänzlich auszuschließen, daß zum Beispiel Getriebeabriebe oder sonstige Verschmutzungen (zum Beispiel Späne), in den Verriegelungsbereich geschwemmt werden können und so die Bewegungen der Kugeln behindern. Ist aber die Kugelbewegung nicht sichergestellt, ist insgesamt die Funktion der Verriegelungseinheit nicht gewährleistet. Die Anordnung nach dem Stand der Technik ist daher verschmutzungsempfindlich.

Darüber hinaus liegt eine Kugel nur punktweise an den umgebenden Flächen an. Das bedeutet, daß die Verriegelungskräfte nur auf kleinen Flächen wirken und die entsprechenden Druckbelastungen enorm sind. Dies wird im Stand der Technik mit entsprechend speziell gehärteten Teilen kompensiert, jedoch sind diese Teile in der Herstellung entsprechend aufwendig.

Die DE 198 20 920 A1 beschreibt eine gattungsbildende Parksperreneinrichtung für ein automatisches Kraftfahrzeuggetriebe mit einem Sperrglied, das bei einer eingelegten Parksperre das Getriebe blockiert und das über einen schwenkbaren Stellhebel von einer Feder belasteten Hydraulikkolben beaufschlagt wird. Bei drucklosem Hydraulikkolben drückt die Feder das Sperrglied in die Blockierrichtung. Ein Ende eines Fortsatzes am Stellhebel ist mit einem elektromagnetisch gesteuerten Rastmechanismus im Wirkkontakt. Bei erregtem Elektromagneten bleibt das Ende des Fortsatzes eingerastet. Wird der Elektromagnet stromlos, so gibt der Rastmechanismus aufgrund einer Federwirkung den Stellhebel frei und das Sperrglied blockiert das Getriebe.

Die WO 02/10619 A1 beschreibt eine Parksperre für einen Antrieb, insbesondere für automatische oder automatisierte Getriebe von Kraftfahrzeugen, mit einer Sperreinrichtung, die aufgrund eines über eine Bedieneinrichtung ausgelösten Betätigungssignals den Antrieb blockiert bzw. freigibt. Die Sperreinrichtung wird durch Betätigung eines Federspeichers in Sperrstellung gebracht, und die Sperreinrichtung wird über hydraulischen oder pneumatischen Druck aus der Sperrstellung bei gleichzeitigem Vorspannen des Federspeichers mit einer mechanisch wirkenden Verriegelungseinrichtung zum Halten der Sperreinrichtung im nicht sperrenden Zustand gelöst. Ein bestrombarer Elektromagnet kann die Verriegelungseinrichtung in einer Verriegelungsstellung halten. Die Sperreinrichtung weist Rastierkugeln auf, die über einen Anker in einem verriegelnden Zustand oder entriegelnden Zustand bewegt werden können.

Ausgehend von diesem Stand der Technik hat es sich die Erfindung zur Aufgabe gemacht, eine Verriegelungseinheit, wie eingangs beschrieben, eben dahingehend zu verbessern, daß diese einfach herstellbar ist.

Gelöst wird diese Aufgabe durch eine Verriegelungseinheit, wie eingangs beschrieben, wobei vorgeschlagen wird, daß Rast- und Betätigungselement flächig zusammenwirken und auf dem Anker bzw. der Ankerstange ein Bolzen vorgesehen ist und der Bolzen durch die Bewegung des Ankers auf das Betätigungselement wirkt.

Durch diesen erfindungsgemäßen Vorschlag wird erreicht, daß die Druckbelastungen für das Rastelement und Betätigungselement deutlich absinken, da die Verriegelungskräfte auf größere Flächen wirken und daher der Druck entsprechend abgesenkt wird. Wird aber die kräftemäßige Belastung der Bauteile entsprechend reduziert, ist es möglich, diese Bauteile nicht mehr so aufwendig herzustellen, wodurch entsprechender Herstellungsaufwand wegfällt. Gleichzeitig entsteht ein einfacherer, robusterer Aufbau, da die Betätigungselemente nunmehr größer ausbildbar sind, ohne die Gesamtabmessungen des Gerätes zu verändern.

Neben der Möglichkeit, daß der Anker bzw, die Ankerstange direkt auf das Betätigungselement wirkt, ist es möglich durch die Anordnung eines Bolzens zum Beispiel auch eine kulissenartige Führung zu erreichen.

Die Erfindung ist dabei in keinster weise darauf beschränkt, daß das Rast- beziehungsweise Betätigungselement, welches am Kolben oder am Zylinder beziehungsweise mit der Ankerstange oder dem Anker zusammenwirkend angeordnet ist. Es kommt auch im Kontext der Erfindung nicht darauf an, daß das Rastelement beziehungsweise das Bedienungselement sowohl in der Verriegelungsstellung als auch in der Entriegelungsstellung immer miteinander zusammenwirkt. Jedoch ist vorgesehen, daß die beiden Elemente zumindest bei einer Änderung der Stellung zusammenwirken, wobei im reversiblen Fall gegebenenfalls weitere Mittel angeordnet sein können, die eine entsprechende Bewegung erreichen.

Erfindungsgemäß wird vorgeschlagen, daß das Rastelement und das Betätigungselement flächig zusammenwirken. Als flächiges Zusammenwirken wird im Sinne dieser Erfindung auch schon angesehen, wenn Rastelement bzw. Betätigungselement linienartig zusammenwirken. Auch dadurch wird bereits eine erhebliche schonung des Materials erreicht, da die punktgemäße Einleitung der Kräfte, wie sie bei der Kugel bekannt sind, entlang einer Linie erfolgt. Letztendlich stellt aber eine linienartige Ausgestaltung im Sinne dieser Erfindung bereits ebenfalls ein flächiges Anliegen dar, da der erfindungsgemäße Effekt hierdurch ebenfalls erreicht wird, nämlich die Flächenbelastung in diesem Bauteil zu reduzieren.

Dabei kann auch das anfängliche Einbauen eines linienartigen Anliegens bzw. Zusammenwirkens von Rastelement und Betätigungselement im weiteren Betrieb der Verriegelungseinheit sich zu einem flächigen Anliegen verändern, was zum Beispiel durch entsprechende Materialermüdung erfolgt. Dies kann durch geeignete Toleranzausgleiche kompensiert werden. Insofern gehört auch diese Variante zur Erfindung.

Darüberhinaus schlägt die Erfindung vor, daß das Rastelement einen Absatz, Kragen, Vorsprung oder eine Haltenase aufweist, welche/r mit einem als Haken, Klinke, Vorsprung oder Absatz ausgebildeten Betätigungselement zusammenwirkt. Hierbei ist insbesondere ein formschlüssiges Zusammenwirken von Vorteil, aber nicht einzige Bedingung. Dabei sind die vorgeschlagenen Bauformen an den Elementen einfach herstellbar.

In einer weiteren erfindungsgemäßen Variante ist vorgesehen, daß das Betätigungselement gelenkig beweglich ist. Durch eine Schwenkbewegung ist es einfach möglich, das Betätigungselement in Eingriff bzw. in Zusammenwirken mit dem Rastelement zu bringen und hiervon auch wieder wegzubewegen. Dabei wird in geschickter Weise die Längsbewegung der Ankerstange zum Beispiel durch entsprechende schräge Flächen oder Ebenen auf eine Schwenkbewegung des gelenkig angeordneten Betätigungselementes umgelenkt.

So wird zum Beispiel in einer Variante der Erfindung vorgesehen, daß das Betätigungselement elastisch beweglich beziehungsweise unter Vorspannung steht und das Betätigungselement das Rastelement gegen die hieraus resultierende Vorspannungskraft entweder in die Verriegelungs- oder in die Entriegelungsstellung bewegt. Selbstverständlich ist es erfindungsgemäß auch möglich, die Bewegung von Betätigungs- und Rastelement in kulissenartigen Bahnen zu führen und zu steuern, jedoch könnte dies unter Umständen im rauhen Betrieb, gerade bei verschmutzten Ölen und so weiter, nicht günstig sein. Die Anordnung aber derart, daß eine Vorspannungskraft vorgesehen ist, bewirkt, daß das Betätigungselement nur für einen Schritt, nämlich für die Herstellung der Verriegelungsstellung oder für die Herstellung der Entriegellungsstellung mit dem Rastelement zusammenwirkt. In diesem Fall wirkt dann der Anker beziehungsweise die Ankerstange (mittelbar oder unmittelbar) gegen diese Vorspannungskraft. Dabei erreicht die Erfindung noch zusätzlich eine Erhöhung der Zuverlässigkeit, da keine filigranen Kugeln mehr eingesetzt werden, deren Bewegung leicht durch Späne, die mit dem Öl angeschwemmt werden, behindert werden könnte.

Es gibt verschiedene Varianten wie das Betätigungselement ausgebildet ist, um eine entsprechende Vorspannungskraft vorzusehen. Erfindungsgemäß wird hierbei vorgeschlagen, daß das Betätigungselement eine Spannfeder besitzt beziehungsweise hieran eine Spannfeder angreift oder aus elastischem Material besteht. Als elastisches Material bietet sich zum Beispiel Kunststoff oder auch Federstahl und so weiter, an. Dabei können diese Teile auch als Stanzbiegeteile ausgebildet sein, was die Produktionskosten entsprechend gering hält.

Neben der Anordnung einer Vorspannung für die Bewegung des Betätigungselementes ist es aber auch möglich, daß das Betätigungselement durch die Bewegung des Ankers bzw. der Ankerstange zwangsgeführt ist. Zum Beispiel ist es möglich mit Hilfe des Ankers bzw. der Ankerstange eine Kulissenbahn derart ausgestalten, daß das Betätigungselement zwangsgeführt in der Verriegelungs- und/oder in der Entriegelungsstellung ist. Bei einer solchen Ausgestaltung kann gegebenenfalls auch auf das Anordnen eines elastischen oder federnden Elementes für das Betätigungselement verzichtet werden oder aber die Zwangsführung des Betätigungselementes entsprechend unterstützt werden.

Das gemäß der Erfindung vorgeschlagene Prinzip ist dabei geeignet, in zwei verschiedenen Varianten eingesetzt zu werden. Zunächst ist es möglich, daß das Betätigungselement aufgrund der Vorspannungskraft in der Verriegelungsstellung gehalten ist und die Bewegung des Ankers bzw. der Ankerstange derart auf das Betätigungselement wirkt, daß der Kolben entriegelt ist. In einer kinematischen Umkehr dieses Vorschlages ist es möglich, daß das Betätigungselement aufgrund der Vorspannungskraft in der Entriegelungsstellung gehalten ist und die Bewegung des Ankers bzw. der Ankerstange den Kolben verriegelt. Je nach dem gewünschten Schaltzustand wird die Anordnung entsprechend ausgewählt und realisiert.

Der Einsatzbereich der Verriegelungseinheit ist auf die eingangs beschriebene Parksperre bei Automatikgetrieben nicht beschränkt. Es können auch andere Anwendungsbereiche vorhanden sein, zum Beispiel eine Hydrauliksteuerung und dergleichen, wobei eine entsprechende Verriegelungseinheit von Vorteil ist. Es ist vorgesehen, daß die Verriegelungseinheit einen Elektromagneten aufweist, der üblicherweise aus einer Spule, welche von Strom durchflossen ist, gebildet ist und in welcher ein Anker, beziehungsweise eine Ankerstange gegen die Kraft einer Feder bewegt wird. Solche einfachen, im Stand der Technik hinreichend bekannte Konzepte erlauben es, daß der Elektromagnet sicher zwei Stellungen einnimmt, wobei die erste Stellung durch die Anordnung der Feder dominiert ist, weil nämlich kein Strom durch die Spule fließt, wobei die andere Stellung dann die "angezogene" Stellung ist, nämlich wenn der Anker (gegebenenfalls mit hydraulischer Unterstützung) von der stromdurchflossenen Spule angezogen wird, und die dadurch entstehende Kraft größer ist als die Kraft der Feder.

Es ist dabei von Vorteil, daß die Verriegelungsstellung durch eine stromdurchflossene Spule gekennzeichnet ist. Hierdurch kann in einfacher Weise zum Beispiel eine aktive Sicherung vorgesehen werden.

Eine passive Sicherung ist zum Beispiel dadurch gegeben, daß die Entriegelungsstellung durch eine stromlose Spule gekennzeichnet ist. Fällt die Stromversorgung des Elektromagneten aus, zum Beispiel, wenn das Fahrzeug abgestellt wird oder ein sonstiges Problem auftaucht (zum Beispiel Kurzschluß und so weiter), so fällt das Magnetfeld zusammen und die Federkraft dominiert die Stellung der Ankerstange im Elektromagneten. Da das Betätigungselement unmittelbar oder mittelbar von der Ankerstange bewegt wird, wird so das Betätigungselement von der Verriegelungs- in die Entriegelungsstellung gebracht. Der entriegelte, freigegebene Kolben kann dann derart bewegt werden, daß eine Klinke in den Antriebsstrang für das Blockieren des Antriebsstranges bringbar ist.

Die Erfindung erlaubt dabei wiederum zwei Varianten. Es ist gemäß der Erfindung möglich, daß die Verriegelungsstellung durch eine stromdurchflossene Spule gekennzeichnet ist oder aber die Entriegelungsstellung durch eine stromdurchflossene Spule gekennzeichnet ist.

Erfindungsgeäß ist vorgesehen, daß der Kolben das Rastelement trägt. Es ist aber im Sinne der Erfindung in gleicher Weise auch möglich, eine kinematische Umkehr vorzusehen, nämlich derart, daß der Kolben das Betätigungselement trägt und das Rastelement im Zylinder im wesentlichen feststehend, zum Beispiel mit dem Joch des Elektromagneten insbesondere gelenkig verbunden ist. Durch eine entsprechende Anordnung der Ankerstange bis zum Kolben ist ein solches anderes erfindungsgemäßes Konzept problemlos möglich.

Es ist von Vorteil, wenn das Betätigungselement haken- oder klinkenartig ausgebildet ist. Es ist dadurch problemlos möglich, die Größe des Haken und der Klinken entsprechend der maximalen Druckbelastung anzupassen, um so ein flächiges Zusammenwirken des Rastelementes mit dem Betätigungselement zu erreichen. Geschickterweise wird dabei das Rastelement ebenfalls möglichst flächig ausgebildet, wobei zum Beispiel entsprechende Vorsprünge, Flansche oder Kragen und so weiter, zum Beispiel an dem Kolben als Rastelement vorzusehen sind.

Insbesondere wird in einer weiteren erfindungsgemäßen Variante vorgeschlagen, daß an dem Bolzen mindestens eine Schräge, insbesondere eine kegelstumpfartige Schräge für das Zusammenwirken mit dem Betätigungselement vorgesehen ist. Es können dabei mehrere kegelstumpfartige Schrägen nebeneinander bzw. axial (bezüglich der Ankerstange) hintereinander vorgesehen sein.

Bei diesen vorgestellten Varianten ist das Betätigungselement innerhalb der Verriegelungseinheit eigentlich festgelegt, das heißt, der Anker bewegt sich relativ zu dem Betätigungselement. Gegebenenfalls ist das Betätigungselement dabei gelenkig in dem Gehäuse gelagert. In einer anderen Variante der Erfindung ist vorgesehen, daß das Betätigungselement mit der Ankerbewegung mitbewegt wird und mindestens ein weiteres Betätigungsmittel vorgesehen ist, das bei der Bewegung des Betätigungselementes auf diese wirkt. Bei dieser Ausgestaltung der Erfindung bewegt sich das Betätigungselement auf der Ankerstange mit und es sind zum Beispiel im Gehäuse vorstehende Betätigungsmittel angeordnet, die auf das zum Beispiel ebenfalls gelenkig ausgebildete Betätigungselement wirken und so das Zusammenwirken des Betätigungselementes mit dem Rastelement leisten. Die Erfindung umfaßt daher sowohl bezogen auf den Anker feststehende wie auch bewegliche Betätigungselemente.

Üblicherweise wird die Verriegelungseinheit einen im wesentlichen rotationssymmetrischen Aufbau aufweisen, wobei bei einer entsprechenden koaxialen Führung es problemlos möglich ist, daß das Betätigungselement von außen insbesondere umfassend mit dem Rastelement zusammenwirkt. Eine solche Anordnung erlaubt insbesondere das Ausbilden von großen Anlageflächen, um wiederum die jeweilige Flächenbelastung gering zu halten.

In gleicher Weise ist es natürlich auch möglich, daß das Betätigungselement von innen mit dem Rastelement zusammenwirkt.

Die Erfindung ist auf die rotationssymmetrische Auslegung der Verbindungseinheit nicht beschränkt, es können auch andere Geometrien Verwendung finden.

Des Weiteren ist gemäß der Erfindung vorgesehen, daß das Rastelement gelenkig ausgebildet ist. Die Erfindung behält es sich vor, entweder das Rastelement oder das Betätigungselement oder auch beide gemeinsam gelenkig auszubilden. Dabei sind gegebenenfalls auch entsprechende Mittel vorgesehen, die bei der Bewegung des Kolbens, an welchem ja das Rastelement angeordnet ist, auf diesen wirken und so eine gelenkige Bewegung ergeben.

Gemäß der Erfindung ist es auch möglich, daß das Betätigungselement als loses Bauteil ausgebildet ist. Zum Beispiel ist es möglich, daß das Betätigungselement als Verriegelungsstein ausgestaltet ist, welches zum Beispiel auf eine Kulissenbahn oder in einem Käfig geführt ist. Durch eine solche Ausgestaltung ist ebenfalls ein flächiges Zusammenwirken mit dem Rastelement möglich. Dabei ist vorgesehen, daß hierbei das als loses Bauteil ausgebildete Betätigungselement weder am Anker bzw. der Ankerstange befestigt ist, noch mit dem Gehäuse festgelegt ist. Gleichwohl ist vorgesehen, daß gegebenenfalls Federn für die Führung des als Verriegelungsstein ausgebildeten Betätigungselementes vorhanden sind.

In der bevorzugten Variante der Erfindung ist vorgesehen, daß der Kolben eine als Längentoleranzausgleich wirkende Dämpfungsfeder trägt.

Die Erfindung betrifft insbesondere auch ein Automatikgetriebe mit einer Verriegelungseinheit wie beschrieben, wobei die Verriegelungsstellung in der Parkstellung des Getriebes aktiviert ist. Günstigerweise wird dabei vorgesehen, daß in der Parkstellung die Spule des Elektromagneten stromlos ist. Dadurch wird erreicht, daß in der Parkstellung eine Verriegelungsstellung existiert, wobei die Spule des Elektromagneten stromlos ist. In dieser passiven Stellung wird eine zuverlässige Verriegelung erreicht und das Getriebe entsprechend gekoppelt beziehungsweise blockiert. Auch ist es günstig, in der Verriegelungsstellung keine elektrische Energie zu vergeuden, die bei einem Fahrzeug ansonsten aus der Bordbatterie zu entnehmen wäre und diese entsprechend schwächen würde.

In der Zeichnung ist die Erfindung schematisch dargestellt. Es zeigen
- Fig. 1a und 2: in einem Schnitt die erfindungsgemäße Verriegelungseinheit in jeweils zwei unterschiedlichen Stellungen und
- Fig. 1b: ein Detail von Fig. la.

Die erfindungsgemäße Verriegelungseinheit 1 besteht aus einem in einem Gehäuse 18 längsbeweglichen Kolben 2. Durch die diversen Bohrungen steht entsprechender Druck eines Hydrauliköles beispielsweise auf der Rückseite des Kolbens an.

In allen Figuren sind jeweils zwei Stellungen gezeigt. In der oberen Figurenhälfte ist jeweils die Verriegelungsstellung gezeigt, in der unteren Figurenhälfte jeweils die Entriegelungsstellung.

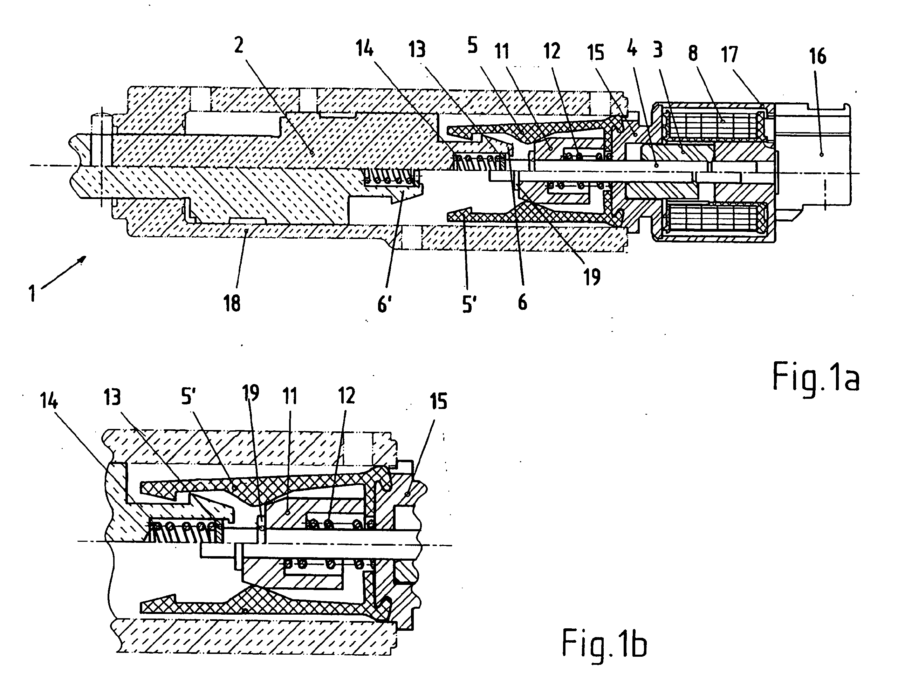

Auf der rechten Seite in Fig. 1a beziehungsweise 2 ist der Elektromagnet angeordnet. Der Anschlußbereich ist von der Abdeckkappe 16 verdeckt. Der Elektromagnet wird im Wesentlichen gebildet von einer Spule 8, durch welche Strom fließt, um den Elektromagneten zu aktivieren sowie einem Anker 3 beziehungsweise einer mit dem Anker 3 verbundenen Ankerstange 4.

In der oberen Figurenhälfte ist der Anker 3 vom Elektromagneten angezogen, in der unteren Figurenhälfte besteht ein entsprechender Spalt, der sich aufgrund der Feder 12 ergibt, die entgegen der Kraft des Elektromagneten die Ankerstange nach links zu versetzen versucht.

Die Ankerstange 4 trägt an ihrem linken, aus dem Elektromagneten herausstehenden Ende einen Bolzen 11. Die Feder 12 stützt sich in diesem Bolzen 11 ab und liegt auf der anderen Seite letztendlich auf dem Joch 15 auf.

Wird nun der Elektromagnet beziehungsweise die Spule 8 bestromt, so wird die Feder 12 gepreßt, wenn sich die Ankerstange 4 und auch der Bolzen 11 nach rechts versetzen. Im stromlosen Zustand entspannt sich die Feder 12 wieder, wodurch sich der Bolzen 11 nach links versetzt.

Die Ankerstange 4 wirkt über den Bolzen 11 mittelbar auf das Betätigungselement 5.

Das Betätigungselement 5 ist in dem in Fig. 1a gezeigten Ausführungsbeispiel hakenartig ausgebildet und in der oberen Figurenhälfte noch nicht unmittelbar mit dem Bolzen 11 in Kontakt (siehe auch Vergrößerung in Fig. 1b). Der Bolzen 11 weist an seinem vorderen Ende eine Abflachung auf, die mit einer entsprechenden Nase des Betätigungselementes 5 zusammenwirkt. In der Phase, in welcher der Bolzen 11 noch nicht auf das Betätigungselement 5 einwirkt, wird deutlich, daß das Betätigungselement 5 konisch nach innen vorstehend angeordnet ist. Dadurch gelangt das vordere Ende des Betätigungselementes 5 soweit nach innen, daß die an dem vorderen Ende angeordnete Klinke mit einem entsprechenden Kragen an dem Kolben haltend zusammenwirkt. Der Kolben trägt dabei an seinem vorderen, der Magnetspule 8 zugewandten Ende das Rastelement 6 mit dem flächig ausgebildeten Kragen.

In der in Fig. 1a in der oberen Figurenhälfte dargestellten Verriegelungsposition ist klar, daß bei einer Bewegung des Kolbens 2 nach links diese Bewegung von dem nach innen vorstehenden Betätigungselement 5 blockiert ist. Das Rastelement 6 bleibt an dem Betätigungselement 5 hängen. Die Bewegung des Kolbens 2 ist verriegelt.

Hiergegen zeigt die in Fig. 1a untere Figurenhälfte die entriegelte Stellung. Der Bolzen 11 ist dabei soweit nach links gesetzt, daß dessen äußere Flanke auf der Nase des Betätigungselementes 5 gleitet und diesen radial nach außen drückt. Dies geschieht gegen die Vorspannungskraft, die aus der Elastizität des Betätigungselementes 5 herrührt. Das Betätigungselement 5' beziehungsweise dessen vorderes Ende kommt frei von dem Rastelement 6' und erlaubt eine Bewegung des Kolbens nach links, wie dargestellt. Der Kolben ist nicht verriegelt, er ist entriegelt.

Das in dem Ausführungsbeispiel nach Fig. 1a gezeigte Betätigungselement 5 wird aufgrund der Vorspannungskraft in der Verriegelungsstellung (obere Figurenhälfte) gehalten und die Bewegung des Ankers beziehungsweise der Ankerstange entriegelt den Kolben 2.

Das Rastelement 6 ist hierbei auf dem Kolben 2 vorgesehen und trägt einen Kragen oder Vorsprung, welcher kraft- und formschlüssig mit dem entsprechenden Haken oder der Klinke des Betätigungselementes 5, 5' zusammenwirkt. In Fig. 1a ist ein im Wesentlichen rotationssymmetrischer Aufbau gewählt. Es ist daher möglich, eine Vielzahl von entlang dem Umfang des Kolbens beziehungsweise des Rastelementes 6 vorgesehene Betätigungselemente 5 anzuordnen. Durch diese ist es möglich, eine hohe Verriegelungskraft einzuprägen, ohne zusätzliche Maßnahmen wie Werkstückhärtung und so weiter vorzusehen.

In dem Ausführungsbeispiel nach Fig. 1a ist das Betätigungselement 5 klauenartig ausgebildet und übergreift von außen das Rastelement 6. Umgekehrt taucht das Rastelement 6 in das Betätigungselement 5 ein.

Dabei ist es von Vorteil, daß der Kolben 2 mit dem Rastelement 6 als (verhältnismäßig einfaches) Drehteil ausgebildet ist. Dies verringert die Herstellungskosten dieses Bauteiles erheblich.

Der Elektromagnet trägt ein magnetisch leitendes Gehäuse 17, das sich an die Abdeckkappe 16 anschließt.

Der Kolben 2 besitzt an seinem vorderen, dem Elektromagneten zugewandten Ende eine Dämpfungsfeder 14, die sich mit der Scheibe 13 gesichert an dem vorderen Ende der Ankerstange 4 abstützt. Dadurch wird das harte Auffahren des Kolbens 2 auf die Ankerstange 4 vermieden und die Beanspruchung der Ankerstange 4 deutlich reduziert. Gleichzeitig ist es möglich, daß die Dämpfungsfeder 14 als Längentoleranzausgleich benützt wird und somit zwei verschiedenen Zwecken dient. Der Bolzen 11 liegt auf der Ankerstange 4 an einer Scheibe 19 an, wobei die Scheibe 19 dem Kolben 2 zugewandt ist.

Das Betätigungselement 5 ist in dem hier gezeigten Ausführungsbeispiel auf dem Joch 15 aufgespritzt oder aufgeclipst, wobei das Joch 15 den Elektromagneten zum Kolben hin anschließt. Das Joch 15 weist eine Öffnung auf, durch welche die Ankerstange in Richtung des Kolbens heraustritt.

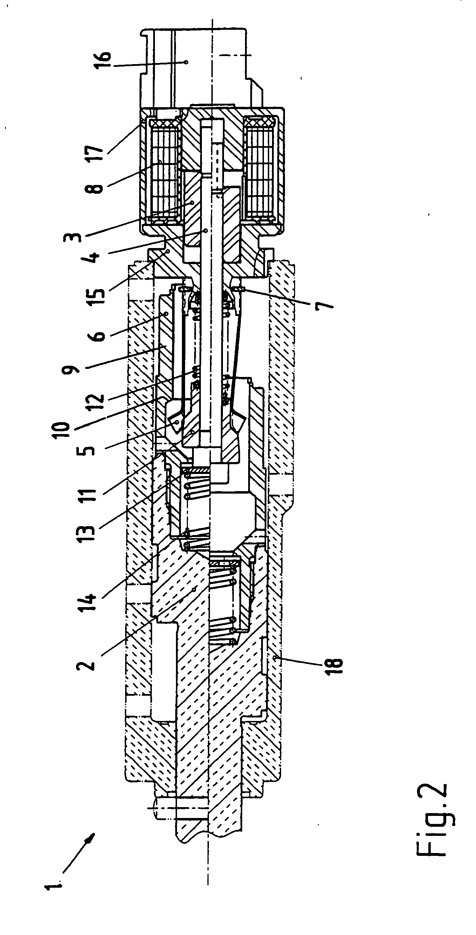

In Fig. 2 ist eine Variante der erfindungsgemäßen Verriegelungseinheit 1 gezeigt. In diesem Ausführungsbeispiel ist das Rastelement 6 des Kolbens 2 gegebenenfalls auch als getrenntes Bauteil ausgeführt und mit diesem zum Beispiel verstemmt. Das Rastelement 6 ist hierbei als Hülse ausgebildet, wobei die Hülse 6 das Betätigungselement 5 überfährt. In der Hülse 6 ist ein Absatz, Vorsprung oder Flansch vorgesehen, der in der Verriegelungsstellung (siehe obere Figurenhälfte) mit dem Betätigungselement 5 zusammenwirkt.

Das Betätigungselement 5 ist hierbei zum Beispiel als Stanzteil ausgebildet und trägt an seinem vorderen, dem Kolben 2 zugewandten Ende eine entsprechende Haltenase, die mit dem Vorsprung des Rastelementes 6 haltend zusammenwirkt.

Auch hier wird das Betätigungselement 5 mittelbar über den Bolzen 11 betätigt. Der Bolzen 11 weist eine schräge Fläche auf, das Betätigungselement 5 besitzt eine Vorspannung in Richtung auf den Bolzen 11 zu. In der Entriegelungsstellung (untere Bildhälfte in Fig. 2) ist der Bolzen 11 soweit nach links versetzt, daß der Absatz wirksam wird und eine radiale Bewegung des Rastelementes 5 zuläßt, derart, daß das Rastelement 5 nicht mehr an dem Absatz oder Vorsprung 10 in der Hülse des Rastelementes 6 haltend blockierend eingreift. Die an dem Bolzen 11 vorgesehene schräge Fläche wird bei einer Bewegung der Ankerstange nach rechts wirksam, wodurch das Betätigungselement 5 radial nach außen gedrückt wird und den vorstehenden Absatz in der Hülse hintergreift. Eine Bewegung der Hülse beziehungsweise des Kolbens nach links ist dadurch blockiert.

In dem Ausführungsbeispiel nach Fig. 2 umschließt das hülsenartige Rastelement 6 das Betätigungselement 5, wodurch das Betätigungselement 5 von innen mit dem Rastelement 6 zusammenwirkt.

In Fig. 2 ist im Gegensatz zu Fig. 1a gezeigt, daß das Betätigungselement 5 aufgrund der Vorspannkraft in der Entriegelungsstellung gehalten ist und die Bewegung des Ankers 3 beziehungsweise der Ankerstange 4 den Kolben 2 verriegelt. Umgekehrt ist in Fig. 1a gezeigt, daß das Betätigungselement 5 aufgrund der Vorspannungskraft in der Verriegelungsstellung gehalten ist und die Bewegung des Ankers 3 beziehungsweise der Ankerstange 4 den Kolben 2 entriegelt.

Zur Verstärkung der Vorspannkraft des Betätigungselementes 5 ist in diesem Ausführungsbeispiel eine Spannfeder 7 vorgesehen, die im Ansatzbereich des Betätigungselementes 5 angeordnet ist. Diese Spannfeder 7 erhöht die Vorspannung, wodurch das Betätigungselement 5 noch effektiver auf den Bolzen 11 und dessen schrägen Flächen geführt ist. Des Weiteren ist vorgesehen, daß die Spannfeder 7 auch zur Befestigung des Betätigungselementes 5 an dem Joch 15 dient.

## Patentansprüche

1. Verriegelungseinheit für das Verriegeln der Bewegung eines mit Druck beaufschlagbaren Kolbens (2), wobei ein Elektromagnet (8) vorgesehen ist, dessen Anker bzw. Ankerstange (4) unmittelbar oder mittelbar auf ein Betätigungselement (5) wirkt, welches mit einem Rastelement (6) derart zusammenwirkt, daß das Rastelement (6) in einer Verriegelungsstellung die Bewegung des Kolbens (2) blockiert bzw. das Rastelement in einer Entriegelungstellung die Bewegung des Kolbens freigibt, wobei Rastelement (6) und Betätigungselement (5) flächig zusammenwirken **dadurch gekennzeichnet, daß** auf dem Anker (3) bzw. der Ankerstange (4) ein Bolzen (11) vorgesehen ist und der Bolzen (11) durch die Bewegung des Ankers (3) auf das Betätigungselement (5) wirkt.

2. Verriegelungseinheit nach Anspruch 1, **dadurch gekennzeichnet, daß** das Rastelement (6) einen Absatz, Kragen, Vorsprung oder eine Haltenase aufweist, welche/r mit einem als Haken, Klinke, Vorsprung oder Absatz ausgebildeten Betätigungelement (5) zusammenwirkt.

3. Verriegelungseinheit nach einem oder beiden der vorhergehenden Ansprüche, **dadurch gekennzeichnet, daß** das Betätigungselement (5) gelenkig beweglich ist.

4. Verriegelungseinheit nach einem oder mehreren der vorhergehenden Ansprüche, **dadurch gekennzeichnet, daß** das Betätigungselement (5) elastisch beweglich ist bzw. unter Vorspannung steht und das Betätigunselement (5) das Rastelement (6) gegen die hieraus resultierende Vorspannungskraft entweder in die Verriegelungs- oder in die Entriegelungsstellung bewegt bzw. hält.

5. Verriegelungseinheit nach einem oder mehreren der vorhergehenden Ansprüche, **dadurch gekennzeichnet, daß** an dem Betätigungselement (5) eine Spannfeder (7) angreift und/oder das Betätigungselement (5) aus elastischem Material besteht und/oder das Betätigungselement (5) durch die Bewegung des Ankers (3) bzw. der Ankerstange (4) zwangsgeführt ist.

6. Verriegelungseinheit nach einem oder mehreren der vorhergehenden Ansprüche, **dadurch gekennzeichnet, daß** das Betätigungselement (5) aufgrund der Vorspannungskraft in der Verriegelungsstellung gehalten ist und die Bewegung des Ankers (3) bzw. der Ankerstange (4) derart auf das Betätigungselement wirkt, daß der Kolben (2) entriegelt ist oder das Betätigungselement (5) aufgrund der Vorspannungskraft in der Entriegelungsstellung gehalten ist und die Bewegung des Ankers (3) bzw. der Ankerstange (4) den Kolben (2) verriegelt.

7. Verriegelungseinheit nach einem oder mehreren der vorhergehenden Ansprüche, **dadurch gekennzeichnet, daß** der Elektromagnet eine von Strom durchflossene Spule (8) besitzt und der Anker (3) bzw. die Ankerstange (4) sich gegen die Kraft einer Feder (12) bewegt.

8. Verriegelungseinheit nach einem oder mehreren der vorhergehenden Ansprüche, wobei die Verriegelungsstellung durch eine stromdurchflossene Spule (8) **gekennzeichnet** ist oder die Entriegelungsstellung durch eine stromdurchflossene Spule (8) **gekennzeichnet** ist.

9. Verriegelungseinheit nach einem oder mehreren der vorhergehenden Ansprüche, **dadurch gekennzeichnet, daß** auf dem Anker (3) bzw. der Ankerstange (4) ein Bolzen (11) vorgesehen ist und der Bolzen (11) durch die Bewegung des Ankers (3) auf das Betätigungselement (5) wirkt.

10. Verriegelungseinheit nach einem oder mehreren der vorhergehenden Ansprüche, **dadurch gekennzeichnet, daß** an dem Bolzen (11) mindestens eine Schräge, insbesondere eine kegelstumpfartige Schräge für das Zusammenwirken mit dem Betätigungselement (5) vorgesehen ist.

11. Verriegelungseinheit nach einem oder mehreren der vorhergehenden Ansprüche, **dadurch gekennzeichnet, daß** das Betätigungselement (5) mit der Ankerbewegung mitbewegt wird und mindestens ein weiteres Betätigungsmittel vorgesehen ist, das bei der Bewegung des Betätigungselementes (5) auf dieses wirkt.

12. Verriegelungseinheit nach einem oder mehreren der vorhergehenden Ansprüche, **dadurch gekennzeichnet, daß** der Kolben (2) das Rastelement (6) trägt und/oder der Kolben (2) das Betätigungselement (5) trägt und/oder der Kolben mit Rastelement (6) als Drehteil ausgebildet ist.

13. Verriegelungseinheit nach einem oder mehreren der vorhergehenden Ansprüche, **dadurch gekennzeichnet, daß** das Rastelement (6) von einem auf dem Kolben (2) vorgesehenen Kragen oder Vorsprung gebildet ist und/oder das Rastelement (6) von einer in einer Hülse vorgesehenem Absatz, Vorsprung oder Flansch gebildet ist und/oder das Rastelement gelenkig ausgebildet ist.

14. Verriegelungseinheit nach einem oder mehreren der vorhergehenden Ansprüche, **dadurch gekennzeichnet, daß** das Betätigungselement als loses Bauteil ausgebildet ist und/oder das Betätigungselement (5) haken- oder klinkenartig ausgebildet ist und/oder das Betätigungselement (5) von außen mit dem Rastelement (6) zusammenwirkt und/oder das Betätigungselement (5) von innen mit dem Rastelement (6) zusammenwirkt und/oder das Betätigungselement (5) als Kunststoff- oder/oder Stanzbiegeteil ausgebildet ist.

15. Verriegelungseinheit nach einem oder mehreren der vorhergehenden Ansprüche, **dadurch gekennzeichnet, daß** die Ankerstange (4) federgelagert an dem Kolben (2) in der Verriegelungsstellung anliegt und/oder der Kolben (2) eine Dämpfungsfeder (14) als Längentoleranzausgleich trägt.

16. Verriegelungseinheit nach einem oder mehreren der vorhergehenden Ansprüche, **dadurch gekennzeichnet, daß** der mit Druck beaufschlagte Kolben (2) von dem Betätigungselement (5) in der Verriegelungsstellung gehalten ist, da die stromdurchflossene Spule (8) den Anker (3) derart anzieht, daß das Betätigungselement (5) mit dem Rastelement (6) haltend zusammenwirkt.

## Claims

1. Locking unit for the locking of the movement of a piston (2) which can be impinged with pressure, an electromagnet (8) being provided the armature, respectively the armature bar (4), of which acts directly or indirectly on an operating element (5) which co-operates with a catching element (6) in such a way that in a locking position the catching element (6) blocks, respectively in an unlocking position the catching element releases, the movement of the piston (2), catching element (6) and operating element (5) co-operating surface to surface, **characterised in that** on the armature (3), respectively the armature bar (4) a bolt (11) is provided, and the bolt (11) acts by means of movement of the armature (3) on the operating element (5).

2. Locking unit according to claim 1, **characterised in that** the catching element (6) has a shoulder, collar, projection or a holding nozzle which co-operates with an operating element (5) designed as a hook, catch, projection or shoulder.

3. Locking unit according to one or both of the preceding claims, **characterised in that** the operating element (5) can move flexibly.

4. Locking unit according to one or more of the preceding claims, **characterised in that** the operating element (5) can move elastically, respectively is under prestress, and the operating element (5) moves, respectively holds, the catching element (6) against the prestress power resulting from that either in the locking position or in the unlocking position.

5. Locking unit according to one or more of the preceding claims, **characterised in that** a tension spring (7) engages at the operating element (5), and/or the operating element (5) consists of elastic material, and/or the operating element (5) is forced guided by the movement of the armature (3), respectively the armature bar (4).

6. Locking unit according to one or more of the preceding claims, **characterised in that** the operating element (5) is held in the locking position because of the prestress power, and the movement of the armature (3), respectively the armature bar (4), acts on the operating element in such a way that the piston (2) is unlocked, or the operating element (5) is held in the unlocked position because of the prestress power, and the movement of the armature (3), respectively the armature bar (4), locks the piston (2).

7. Locking unit according to one or more of the preceding claims, **characterised in that** the electromagnet has a coil (8) through which the current flows, and the armature (3), respectively the armature bar (4), moves against the power of a spring (12).

8. Locking unit according to one or more of the preceding claims, wherein the locking position is **characterised by** a coil (8) through which the current flows, or the unlocking position is **characterised by** a coil(8) through which the current flows.

9. Locking unit according to one or more of the preceding claims, **characterised in that** on the armature (3), respectively on the armature bar (4), a bolt (11) is provided, and the bolt (11) acts through the movement of the armature (3) on the operating element (5).

10. Locking unit according to one or more of the preceding claims, **characterised in that** on the bolt (11) at least one bevelling, in particular a cone-shaped bevelling, is provided for co-operating with the operating element (5).

11. Locking unit according to one or more of the preceding claims, **characterised in that** the operating element (5) is moved together with the movement of the armature, and at least one further operating means is provided which acts on the operating element (5) when the operating element is moved.

12. Locking unit according to one or more of the preceding claims, **characterised in that** the piston (2) carries the catching element (6), and/or the piston (2) carries the operating element (5), and/or the piston with catching element (6) is designed as turned part.

13. Locking unit according to one or more of the preceding claims, **characterised in that** the catching element (6) is formed by a collar or projection provided on the piston (2), and/or the catching element (6) is formed by a shoulder, projection or flange provided in a sleeve, and/or the catching element is designed flexibly.

14. Locking unit according to one or more of the preceding claims, **characterised in that** the operating element is designed as a movable component, and/or the operating element (5) is designed like a hook or a catch, and/or the operating element (5) co-operates from the outside with the catching element (6), and/or the operating element (5) co-operates with the catching element (6) from the inside, and/or the operating element (5) is designed as synthetic or punching bent component.

15. Locking unit according to one or more of the preceding claims, **characterised in that** the armature bar (4) sits close to the piston (2) spring-supported in the locking position, and/or the piston (2) carries an absorbing spring (14) as compensation for longitudinal tolerance.

16. Locking unit according to one or more of the preceding claims, **characterised in that** the piston (2) impinged with pressure is held in the locking position by the operating element (5) as the coil (8) flown-through by current attracts the armature (3) in such a way that the operating element (5) co-operates with the catching element (6) in a holding way.

## Revendications

1. Unité de verrouillage, permettant de bloquer le mouvement du piston (2) d'un vérin mis sous pression, comportant un aimant électrique (8) dont le noyau ou la tige (4) du noyau déplace directement ou indirectement un élément d'actionnement (5), qui agit via des surfaces de contact planes sur un élément d'enclenchement (6) de façon soit à immobiliser le piston (2) dans une position de verrouillage, soit à libérer ce piston (2) dans une position de déverrouillage, **caractérisée en ce qu'**une butée (11) située sur le noyau (3) ou sur la tige (4) du noyau agit sur l'élément d'actionnement (5) par le mouvement du noyau (3).

2. Unité de verrouillage selon la revendication 1, **caractérisée en ce que** l'élément d'enclenchement (6) comporte un rebord, un repliement, une butée ou un crochet, interagissant avec un crochet, une poignée ou un rebord situé sur l'élément d'actionnement (5).

3. Unité de verrouillage selon une ou deux des revendications précédentes, **caractérisée en ce que** l'élément d'actionnement (5) est articulé et mobile.

4. Unité de verrouillage selon une ou plusieurs des revendications précédentes, **caractérisée en ce que** l'élément d'actionnement (5) est mobile de façon élastique ou soumis à une tension mécanique permanente et **en ce que** cet élément d'actionnement (5) déplace ou maintient l'élément d'enclenchement (6) contre cette force permanente résultante vers ou dans la position de verrouillage ou vers ou dans la position de déverrouillage.

5. Unité de verrouillage selon une ou plusieurs des revendications précédentes, **caractérisée en ce qu'**un ressort de rappel (7) agit sur l'élément d'actionnement (5) et/ou **en ce que** l'élément d'actionnement (5) consiste en un matériau élastique et/ou **en ce que** l'élément d'actionnement (5) est guidé par le mouvement du noyau (3) ou par celui de la tige (4).

6. Unité de verrouillage selon une ou plusieurs des revendications précédentes, **caractérisée en ce que** l'élément d'actionnement (5) est maintenu par la tension mécanique permanente dans la position de verrouillage et le mouvement du noyau (3) ou de la tige (4) du noyau déverrouille le piston (2) à l'aide de l'élément d'actionnement (5) ou **en ce que** l'élément d'actionnement (5) est maintenu par la tension mécanique permanente dans la position de déverrouillage et le mouvement du noyau (3) ou de la tige (4) du noyau verrouille le piston (2).

7. Unité de verrouillage selon une ou plusieurs des revendications précédentes, **caractérisée en ce que** l'aimant électrique comporte une bobine (8) parcourue par un courant électrique et **en ce que** le noyau (3) ou la tige (4) du noyau se déplace contre la force d'un ressort (12).

8. Unité de verrouillage selon une ou plusieurs des revendications précédentes ayant comme signe distinctif que soit la position de verrouillage, soit la position de déverrouillage nécessite un courant électrique parcourant la bobine (8).

9. Unité de verrouillage selon une ou plusieurs des revendications précédentes, **caractérisée en ce que** une butée (11) est située sur le noyau (3) ou sur la tige (4) du noyau, et **en ce que** cette butée (11) agit sur l'élément d'actionnement (5) par le mouvement du noyau (3).

10. Unité de verrouillage selon une ou plusieurs des revendications précédentes, **caractérisée en ce qu'**au moins une surface inclinée et, de préférence, une surface conique est prévue au niveau de la butée (11) pour l'interaction avec l'élément d'actionnement (5).

11. Unité de verrouillage selon une ou plusieurs des revendications précédentes, **caractérisée en ce que** l'élément d'actionnement (5) se déplace de manière synchrone avec le mouvement du noyau, et **en ce qu'**au moins un autre élément d'actionnement existe et agisse sur le premier élément d'actionnement (5) lors de son déplacement.

12. Unité de verrouillage selon une ou plusieurs des revendications précédentes, **caractérisée en ce que** le piston (2) porte l'élément d'enclenchement (6) et/ou **en ce que** le piston (2) porte l'élément d'actionnement (5) et/ou **en ce que** le piston et l'élément d'enclenchement (6) sont des éléments rotatifs.

13. Unité de verrouillage selon une ou plusieurs des revendications précédentes, **caractérisée en ce que** l'élément d'enclenchement (6) est formé au niveau du piston (2) par un repliement ou un rebord, et/ou **en ce que** l'élément d'enclenchement (6) est formé par une douille comportant à l'intérieur un repliement, un rebord ou une bride, et/ou **en ce que** l'élément d'enclenchement est articulé.

14. Unité de verrouillage selon une ou plusieurs des revendications précédentes, **caractérisée en ce que** l'élément d'actionnement est une pièce libre et/ou **en ce que** l'élément d'actionnement (5) possède des crochets ou des poignées et/ou **en ce que** l'élément d'actionnement (5) interagit par l'extérieur avec l'élément d'enclenchement (6) et/ou **en ce que** l'élément d'actionnement (5) interagit par l'intérieur avec l'élément d'enclenchement (6) et/ou **en ce que** l'élément d'actionnement (5) est un élément en plastique et/ou fabriqué par emboutissage.

15. Unité de verrouillage selon une ou plusieurs des revendications précédentes, **caractérisée en ce que** la tige (4) du noyau est guidée par un ressort et vient au contact du piston (2) dans la position de verrouillage et/ou **en ce que** le piston (2) comporte un ressort amortissant (14) comme élément de compensation longitudinale.

16. Unité de verrouillage selon une ou plusieurs des revendications précédentes, **caractérisée en ce que** le piston (2) mis sous pression est immobilisé par l'élément d'actionnement (5) dans une position de verrouillage, puisque la bobine (8), parcourue par un courant électrique, attire le noyau (3) de façon suffisante pour que l'élément d'actionnement interagisse avec l'élément d'enclenchement (6) de manière continue.
